# EUROPÄISCHE PATENTSCHRIFT

(11) **EP 2 205 770 B1**
(45) Veröffentlichungstag und Bekanntmachung des Hinweises auf die Patenterteilung: **04.06.2014**
(21) Anmeldenummer: 08799927.2
(22) Anmeldetag: 22.09.2008
(51) Int. Cl.: B23K 35/00, C21D 6/00, C22C 38/00, C22C 38/44, C21D 9/04

(54) **ZWISCHENSTÜCK FÜR DIE VERBINDUNG VON MANGANSTAHLFORMKÖRPER MIT KOHLENSTOFFSTAHL SOWIE VERFAHREN ZUM VERBINDEN VON MANGANHARTSTAHLGUSSTEILEN MIT REGELSCHIENEN**
INTERMEDIATE PIECE FOR CONNECTING MANGANESE STEEL MOLDED BODIES WITH CARBON STEEL AND METHOD FOR CONNECTING MANGANESE HIGH-CARBON STEEL CAST PARTS TO CONTROL RAILS
PIÈCE INTERMÉDIAIRE POUR ASSEMBLER DES CORPS FAÇONNÉS EN ACIER AU MANGANÈSE AVEC DE L'ACIER AU CARBONE, ET PROCÉDÉ POUR ASSEMBLER DES PIÈCES MOULÉES EN ACIER AUSTÉNITIQUE AU MANGANÈSE AVEC DES RAILS STANDARD

(30) Priorität: 05.10.2007 AT 15842007
(43) Veröffentlichungstag der Anmeldung: 14.07.2010
(73) Patentinhaber: voestalpine Weichensysteme GmbH, 8740 Zeltweg (AT); voestalpine VAE GmbH, 1010 Wien (AT)
(72) Erfinder: BLUMAUER, Johannes, A-8740 Zeltweg (AT)
(74) Vertreter: Keschmann, Marc
(86) Internationale Anmeldenummer: PCT/AT2008/000338
(87) Internationale Veröffentlichungsnummer: WO 2009/043068

(56) Entgegenhaltungen:
- EP-A- 0 391 007
- EP-A- 1 455 015
- US-A- 4 144 442
- US-A- 5 170 932
- US-A- 5 304 777
- ZHANG ET AL: "Flash butt welding of high manganese steel crossing and carbon steel rail" MATERIALS SCIENCE AND ENGINEERING A: STRUCTURAL MATERIALS:PROPERTIES, MICROSTRUCTURE & PROCESSING, LAUSANNE, CH, Bd. 454-455, 3. April 2007 (2007-04-03), Seiten 288-292, XP022344605 ISSN: 0921-5093

## Beschreibung

Die Erfindung bezieht sich auf ein Zwischenstück für die Verbindung von Manganstahlformkörpern mit Kohlenstoffstahl, insbesondere von Manganhartstahlgussherzstücken mit Regelschienen sowie auf ein Verfahren zum Verbinden von Manganhartstahlgussteilen mit Regelschienen.

Manganhartstahlguss lässt sich nicht umittelbar mit dem Regelschienenstahl verschweißen, da für die Verschweißung eine verhältnismäßig hohe Temperatur erforderlich ist. Austenitischer Manganstahlguss hat die Eigenschaft, sich bei Erwärmung auf über 300° C aufgrund von Karbidausscheidungen im Gefüge stark zu verspröden, wobei in der Folge bei einer langsamen Abkühlung das spröde Gefüge aufrecht bleibt. Es ist daher erforderlich, eine Erhitzung auf hohe Temperaturen vorzunehmen und in der Folge eine rasche Abkühlung vorzunehmen, um eine derartige Versprödung zu vermeiden. Eine derartige rasche Abkühlung kann beispielsweise durch Abschrecken in Wasser erfolgen. Kohlenstoffstahl, wie er als Regelschienenstahl eingesetzt wird, hat wiederum die Eigenschaft, bei rascher Abkühlung spröde zu werden, sodass hier im Anschluss an eine Verschweißung, um eine Versprödung zu vermeiden, die Abkühlung langsam erfolgen muss. Wegen der überragenden Festigkeitseigenschaften werden Herzstücke und Kreuzungsstellen im Schienenverkehr in aller Regel aus austenitischem Manganstahlguss hergestellt, wodurch konträre Bedingungen für die Wärmebehandlung der Schweißstellen bestehen. Um diesen unterschiedlichen Erfordernissen Rechnung tagen zu können, wurden Zwischenstücke zwischen Regelschienen und Manganhartstahlgussherzstücken vorgeschlagen, welche in Hinblick auf ihre gute Schweißbarkeit und eine entsprechende Wärmebehandlung der jeweiligen Schweißverbindung ausgewählt wurden. Derartige zumindest teilweise austenitische Zwischenstücke weisen aber relativ schlechtere Festigkeitseigenschaften als der benachbarte Regelstahl bzw. das Manganhartstahlgussstück auf.

Ein Verfahren zum Verschweißen von austenitischem Manganhartstahlgussschienenstücken und insbesondere Herzstücken mit Regelschienen ist beispielsweise der AT 343712 zu entnehmen. Bei diesem bekannten Verfahren wird ein Zwischenstück mit geringerer Höhe als der Höhe der Lauffläche des Herzstücks bzw. des Regelschienenstahls eingesetzt und eine Aufpanzerung aus verschleißfestgem Manganstahl vorgenommen. Auf diese Weise soll dem Umstand Rechnung getragen werden, dass im Bereich der Schweißstellen ein Material von wesentlich geringerer Härte vorliegt, welches in der Folge die Gefahr von Eindellungen durch den rollenden Verkehr zur Folge hat. Die Länge eines derartigen Zwischenstücks wurde in der Regel mit über 50 mm bemessen, um überlappende Wärmeeinflusszonen aus den beiden Verschweißungen zu vermeiden.

In Weiterbildung dieser bekannten Vorgangsweise wurde in der AT 350881 bereits vorgeschlagen, das Zwischenstück auf eine geringere Länge zu beschränken, wobei hier nunmehr mit einer Länge zwischen 15 und 25 mm das Auslangen gefunden werden sollte. Mit dieser Maßnahme sollte die Gefahr einer Dellenbildung aufgrund des wesentlich kürzeren, weicheren Teilbereichs der Lauffläche verringert werden. Die prinzipiellen zugrundeliegenden Schwierigkeiten mit einer ausreichenden Härte des Zwischenstücks bleiben aber bei einer derartigen Ausbildung ungelöst.

In der EP 391007 B1 wurde nun bereits vorgeschlagen, eine einfache Abkühlung durch Umgebungsluft auch bei der Verschweißung des Zwischenstücks mit dem Manganhartstahlguss vorzunehmen. Zu diesem Zweck wurden spezielle Werkstoffe ausgewählt, die im Wesentlichen aus 6 bis 11 Gew.% Mangan, 5 bis 8 Gew.% Nickel, 17 bis 20 Gew.% Chrom und einen Deltaferritgehalt im Bereich zwischen 5 und 15 Gew.% aufweisen. Mit derartigen Stählen ebenso wie mit anderen bisher vorgeschlagenen Stählen für das Zwischenstück wurden zwar die Probleme, die eine Direktverschweißung zwischen den beiden Stählen mit sich bringen würde, im Wesentlichen vermieden, wobei aber die Schwachstellen in Bezug auf Dauerfestigkeit und Biegebruchfestigkeit der Gesamtschweißverbindung nicht vollständig gelöst werden konnten, da die austenitischen Bauteile, und insbesondere der Werkstoff des Herzstücks und des Zwischenstücks, nur eine maximale Zugfestigkeit von 500 bis 600 N/mm² erreichen lassen, was daher zu Eindellungen führt.

Die Erfindung zielt nun darauf ab, Eindellungen im Bereich der Schweißverbindung und insbesondere im Übergangsbereich zwischen Regelschiene und Hartmanganstahl besser zu verhindern und einen besonders gleichmäßigen Härte- und Festigkeitsverlauf über die Gesamtverbindung zu schaffen. Zur Lösung dieser Aufgabe besteht das erfindungsgemäße zwischenstück aus einem Stahl aus der Gruppe der austenitisch-ferritischen Duplexstähle mit einem Ferritanteil von < 60 Gew.%. Derartige Stähle aus der Gruppe der Duplexstähle zeichnen sich durch einen Ferritanteil von bis zu 60 Gew.% aus, wobei als Beispiel für einen derartigen Werkstoff der Werkstoff X2CrNiMoN22-5-3 genannt sei, welcher als besonders bevorzugt für die Wahl eines geeigneten Werkstoffs für das Zwischenstück gelten kann. Ein derartiger Stahl weist die nachfolgende Richtanalyse auf:
- C: max 0,03 %
- Cr: 21 - 23 %
- Ni: 4,5 - 6,5 %
- Mo: 2,5 - 3,5 %
- N: 0,1 - 2,22 %

Ein derartiges Duplexstahl-Zwischenstück mit einem Verhältnis von Austenit zu Ferrit von etwa 50 : 50 hat nicht nur sehr gute Eigenschaften zum Verschweißen sowohl mit dem austenitischen Hartmanganstahl auf der einen Seite als auch mit dem perlitischen Schienstahl (Ferrit und Zementit) auf der anderen Seite. Durch den hohen Ferritanteil wird es auch möglich, das Zwischenstück durch gezielte Wärmebehandlung vor, während und/oder nach dem Schweißen auf jene Festigkeit zu bringen, die annähernd im Bereich des Schienenstahls und des Hartmanganstahls vorliegt. Auf eine verbleibende Länge des Zwischenstücks muss bei einer derartigen Ausbildung keine Rücksicht mehr genommen werden, da die Gefahr eines Eindellens durch ein zu weiches Zwischenstückmaterial nicht mehr vorliegt. Insbesondere kann die Zugfestigkeit des zwischenstücks durch eine derartige Wärmebehandlung nach Wahl des geeigneten Zwischenstücks auf 600 bis 800 N/mm² gesteigert werden. In besonders bevorzugter Weise wird hierbei das Zwischenstück in lösungsgeglühter und nachfolgend abgeschreckter Form eingesetzt, wobei mit Vorteil das Zwischenstück in bei 900° C bis 1100° C lösungsgeglühter und nachfolgend mit Wasser und anschließend mit Luft abgeschreckter Form eingesetzt ist.

Das erfindungsgemäße Verfahren zum Verbinden von Manganhartstahlgussteilen mit Regelschienen ist im Wesentlichen dadurch gekennzeichnet, dass ein austenitisch-ferritisches Zwischenstück aus einem Duplexstahl mit < 60 Gew.% Ferrit mit dem Manganstahlgussteil und der Regelschiene verschweißt wird, wobei vorzugsweise ein Zwischenstück mit nachfolgender Richtanalyse
- C: max 0,03 %
- Cr: 21 - 23 %
- Ni: 4,5 - 6,5 %
- Mo: 2,5 - 3,5 %
- N: 0,1 - 2,22 %
zunächst mit der Regelschiene verschweißt wird und anschließend mit dem Manganhartstahlguss verschweißt wird. Prinzipiell erlaubt es das gewählte Zwischenstück während des Schweißvorgangs eine Abkühlung aus der Schweißhitze mittels Pressluft vorzunehmen, und dies sowohl bei dem ersten als auch beim zweiten Schweißvorgang. Um die gewünschten Festigkeitswerte und insbesondere ein Erhöhung der Dauerfestigkeit von ca. 140 N/mm² auf ca. 190 N/mm² zu erreichen, kann mit Vorteil so vorgegangen werden, dass das Zwischenstück vor dem Verschweißen bei 900° C bis 1100° C lösungsgeglüht und anschließend mit Wasser und weiters mit Luft abgeschreckt wird, wobei mit Vorteil die Schweißverbindung mit der Regelschiene nach dem Abkühlen bei 200° C bis 600° C zum Anlassen geglüht wird. Ebenso kann mit Vorteil die Schweißverbindung mit dem Manganstahlgussstück nach dem Abkühlen bei 200° C bis 600° C zum Anlassen geglüht werden. Bei einer derartigen Verfahrensweise kann die Länge des Zwischenstücks beispielsweise etwa 50 mm betragen, wobei eine Erhöhung der Zugfestigkeit auf 600 bis 800 N/mm² durch eine einfache Härtungsbehandlung, wie sie beispielsweise durch ein Explosionsverfestigungsverfahren erreicht werden kann, erzielt werden kann. Mit Vorteil wird daher erfindungsgemäß so vorgegangen, dass das Zwischenstück vor oder nach dem Verschweißen einer Härtungsbehandlung unterworfen wird, wobei eine Explosionsverfestigung im unverschweißten oder im bereits am Werkstück verschweißten Zustand des Zwischenstücks vorgenommen werden kann.

## Patentansprüche

1. Verwendung eines Zwischenstückes für die Verbindung von Manganstahlformkörpern mit Kohlenstoffstahl, insbesondere von Manganhartstahlgussherzstücken mit Regelschienen, **dadurch gekennzeichnet, dass** das Zwischenstück aus Stahl aus der Gruppe der austenitisch-ferritischen Duplexstähle mit einem Ferritanteil von < 60 Gew.% besteht, wobei das Zwischenstück aus Stahl mit der nachfolgenden Richtanalyse
C max 0,03 %
Cr 21 - 23 %
Ni 4,5 - 6,5 %
Mo 2,5 - 3,5 %
N 0,1 - 2,22 %
besteht.

2. Verwendung nach Anspruch 1, **dadurch gekennzeichnet, dass** das Zwischenstück in lösungsgeglühter und nachfolgend abgeschreckter Form eingesetzt ist.

3. Verwendung nach Anspruch 1 oder 2, **dadurch gekennzeichnet, dass** das Zwischenstück in bei 900° C bis 1100° C lösungsgeglühter und nachfolgend mit Wasser und anschließend mit Luft abgeschreckter Form eingesetzt ist.

4. Verfahren zum Verbinden von Manganhartstahlgussteilen mit Regelschienen, **dadurch gekennzeichnet, dass** ein austenitisch-ferritisches Zwischenstück aus einem Duplexstahl mit < 60 Gew.% Ferrit mit dem Manganstahlgussteil und der Regelschiene verschweißt wird, wobei ein Zwischenstück mit nachfolgender Richtanalyse
C max 0,03 %
Cr 21 - 23 %
Ni 4,5 - 6,5 %
Mo 2,5 - 3,5 %
N 0,1 - 2,22 %
zunächst mit der Regelschiene verschweißt wird und anschließend mit dem Manganhartstahlguss verschweißt wird.

5. Verfahren nach Anspruch 4, **dadurch gekennzeichnet, dass** das Zwischenstück während des Schweißvorgangs mit Pressluft gekühlt wird.

6. Verfahren nach Anspruch 4 oder 5, **dadurch gekennzeichnet, dass** das Zwischenstück vor dem Verschweißen bei 900° C bis 1100° C lösungsgeglüht und anschließend mit Wasser und weiters mit Luft abgeschreckt wird.

7. Verfahren nach einem der Ansprüche 4 bis 6, **dadurch gekennzeichnet, dass** die Schweißverbindung mit der Regelschiene nach dem Abkühlen bei 200° C bis 600° C zum Anlassen geglüht wird.

8. Verfahren nach einem der Ansprüche 4 bis 7, **dadurch gekennzeichnet, dass** die Schweißverbindung mit dem Manganstahlgussstück nach dem Abkühlen bei 200° C bis 600° C zum Anlassen geglüht wird.

9. Verfahren nach einem der Ansprüche 4 bis 8, **dadurch gekennzeichnet, dass** das Zwischenstück vor oder nach dem Verschweißen einer Härtungsbehandlung unterworfen wird.

## Claims

1. Use of an intermediate piece for connecting molded articles of manganese steel with carbon steel, in particular austenitic manganese steel casting frogs with standard rails, **characterized in that** the intermediate piece is comprised of steel from the group of austenitic-ferritic duplex steels having a ferrite portion of <60 wt%, wherein the intermediate piece is comprised of steel having the following directional analysis:
C max 0.03 %
Cr 21 - 23 %
Ni 4.5 - 6.5 %
Mo 2.5 - 3.5 %
N 0.1 - 2.22 %

2. Use according to claim 1, **characterized in that** the intermediate piece is used in a solution-annealed and subsequently quenched form.

3. Use according to claim 1 or 2, **characterized in that** the intermediate piece is used in a form solution-annealed at 900°C to 1100°C and subsequently quenched with water followed by air.

4. A method for connecting austenitic manganese steel castings with standard rails, **characterized in that** an austeniticferritic intermediate piece made of duplex steel comprising <60% ferrite is welded with the manganese steel casting and the standard rail, wherein an intermediate piece having the following directional analysis:
C max 0.03 %
Cr 21 - 23 %
Ni 4.5 - 6.5 %
Mo 2.5 - 3.5 %
N 0.1 - 2.22 %
is initially welded with the standard rail and subsequently welded with the austenitic manganese steel casting.

5. A method according to claim 4, **characterized in that** the intermediate piece is cooled with compressed air during the welding procedure.

6. A method according to claim 4 or 5, **characterized in that** the intermediate piece is solution-annealed at 900°C to 1100°C before welding and subsequently quenched with water followed by air.

7. A method according to any one of claims 4 to 6, **characterized in that** the welding connection with the standard rail, after cooling, is annealed at 200°C to 600°C for tempering.

8. A method according to any one of claims 4 to 7, **characterized in that** the welding connection with the manganese steel casting, after cooling, is annealed at 200°C to 600°C for tempering.

9. A method according to any one of claims 4 to 8, **characterized in that** the intermediate piece is subjected to a hardening treatment prior to or after welding.

## Revendications

1. Utilisation d'une pièce intermédiaire pour assembler des corps façonnés en acier au manganèse, avec de l'acier au carbone, en particulier, des pièces centrales coulées en acier au manganèse dur avec des rails standard, **caractérisée en ce que** la pièce intermédiaire est constituée d'acier du groupe des aciers duplex austénitiques-ferritiques présentant une proportion de ferrite de < 60 % en poids, dans laquelle la pièce intermédiaire est constituée d'acier selon l'analyse théorique suivante :
C 0,03 % maximum
Cr 21 à 23 %
Ni 4,5 à 6,5 %
Mo 2,5 à 3,5 %
N 0,1 à 2,22 %.

2. Utilisation selon la revendication 1, **caractérisée en ce que** la pièce intermédiaire est utilisée sous la forme mise en solution et ensuite, trempée.

3. Utilisation selon la revendication 1 ou 2, **caractérisée en ce que** la pièce intermédiaire est utilisée sous la forme mise en solution de 900° C à 1100° C et ensuite trempée à l'eau puis à l'air.

4. Procédé pour assembler des pièces en acier au manganèse dur, avec des rails standard, **caractérisé en ce qu'**une pièce intermédiaire austénitique - ferritique d'un acier duplex présentant < 60 % en poids de ferrite est soudée avec la pièce coulée en acier au manganèse et le rail standard, dans lequel une pièce intermédiaire présentant l'analyse théorique suivante :
C 0,03 % maximum
Cr 21 à 23 %
Ni 4,5 à 6,5 %
Mo 2,5 à 3,5 %
N 0,1 à 2,22 %
est tout d'abord soudée avec le rail standard et ensuite soudée avec la pièce coulée en acier au manganèse dur.

5. Procédé selon la revendication 4, **caractérisé en ce que** la pièce intermédiaire est refroidie à l'air comprimé pendant le processus de soudage.

6. Procédé selon la revendication 4 ou 5, **caractérisé en ce que** la pièce intermédiaire est mise en solution avant le soudage de 900° C à 1100° C et ensuite est trempée à l'eau et encore à l'air.

7. Procédé selon l'une des revendications 4 à 6, **caractérisé en ce que** l'assemblage par soudage avec le rail standard, après le refroidissement de 200° C à 600° C, est porté à incandescence pour le recuit.

8. Procédé selon l'une des revendications 4 à 7, **caractérisé en ce que** l'assemblage par soudage avec la pièce coulée en acier au manganèse après le refroidissement de 200° C à 600° C, est porté à incandescence pour le recuit.

9. Procédé selon l'une des revendications 4 à 8, **caractérisé en ce que** la pièce intermédiaire est soumise, avant ou après le soudage, à un traitement durcisseur.
